Europäisches Patentamt

European Patent Office

Office européen des brevets

(11) Numéro de publication : **0 333 525 B1**

# FASCICULE DE BREVET EUROPEEN

(45) Date de publication du fascicule du brevet :
21.10.92 Bulletin 92/43

(51) Int. Cl.⁵ : **G05G 1/14, B60T 7/04**

(21) Numéro de dépôt : **89400165.0**

(22) Date de dépôt : **20.01.89**

(54) **Moyen de liaison entre une pédale de commande et un organe de commande mobile en translation.**

(30) Priorité : **18.03.88 FR 8803497**

(43) Date de publication de la demande :
**20.09.89 Bulletin 89/38**

(45) Mention de la délivrance du brevet :
**21.10.92 Bulletin 92/43**

(84) Etats contractants désignés :
**DE ES FR GB IT**

(56) Documents cités :
**EP-A- 0 232 984**
**GB-A- 2 051 317**
**US-A- 2 352 392**

(73) Titulaire : **BENDIX EUROPE Services Techniques S.A.**
**126 rue de Stalingrad**
**F-93700 Drancy (FR)**

(72) Inventeur : **Gautier, Jean-Pierre**
**Bendix France S.A. 126 Rue de Stalingrad**
**F-93700 Drancy (FR)**
Inventeur : **Perez, Miguel**
**Bendix France S.A. 126 Rue de Stalingrad**
**F-93700 Drancy (FR)**

## Description

L'invention concerne un moyen de liaison entre une pédale de commande formant levier tournant autour d'un pivot et un organe commandé mobile en translation dans le plan déterminé par le mouvement de la pédale. Elle trouve son application essentielle dans les dispositifs de commande aux pieds pour véhicules automobiles et, plus particulièrement, dans les mécanismes de commande du système hydraulique de freinage des véhicules automobiles.

La pédale de frein d'un véhicule automobile est en relation avec un plongeur qui est susceptible de coulisser dans le servomoteur d'un maître cylindre commandant la pression du liquide dans le circuit hydraulique d'alimentation des moteurs de frein, au moyen d'une tige, d'une part, reliée à la pédale et, d'autre part, appuyant sur le plongeur.

De façon classique, le dispositif incluant le plongeur est fixé au tablier du véhicule, côté moteur, tablier que la tige traverse pour atteindre, côté cabine, la pédale.

La tige a pendant longtemps été fixée à la pédale au moyen d'une chape et d'un goujon. Ce mode de fixation tout à fait efficace présente l'inconvénient d'être relativement coûteux puisque l'opération de fixation nécessite un certain temps qu'il est judicieux de réduire.

Dans ce but, il à été proposé, dans le brevet GB-A-1434290, de pratiquer un bossage dans la pédale, bossage dans lequel vient s'appuyer l'extrémité de la tige comportant une tête de forme arrondie pourvue d'un épaulement, un ressort préformé en appui sur cet épaulement venant maintenir le contact entre la tête de forme arrondie et le bossage correspondant de la pédale.

La solution décrite dans le brevet GB-A-2051317 permet de s'affranchir du précédent ressort préformé en prévoyant une ouverture de forme oblongue dans le bossage, traversée par une pointe faisant saillie de la tête de forme arrondie et de longueur au moins égale à la course de la pédale, un simple circlip monté sur cette pointe assurant le contact entre la tête de forme arrondie et le bossage lors du retour de la pédale en position de repos. Cette dernière solution présente l'avantage d'un montage aisé et d'une grande sécurité puisque la tige ne peut pas quitter la pédale même en cas de perte du circlip. Toutefois, elle présente l'inconvénient de nécessiter une pointe faisant saillie de la pédale et, en outre, elle nécessite une intervention à l'intérieur de la cabine pour disposer le circlip lors du montage du véhicule. La présente invention a pour but d'obvier à ces inconvénients tout en maintenant l'avantage précité de la sécurité.

Elle a donc pour objet un moyen de liaison entre une pédale et une tige, tel que la tige soit forcée de suivre le mouvement de la pédale et tel qu'il ne nécessite pas d'intervention dans la cabine du véhicule lors de la mise en place de la tige.

Selon l'invention, une ouverture en forme de trou de serrure ancienne, comprenant une première partie de forme arrondie d'un diamètre déterminé et une seconde partie de forme oblongue de largeur et de longueur déterminées, prolongeant la première partie du côté opposé au pivot de la pédale dans l'axe longitudinal de cette dernière, la largeur déterminée étant inférieure au diamètre déterminé, est pratiquée en regard du point d'appui de la tige sur la pédale, et l'extrémité de la tige en regard de la pédale est constituée par, successivement, une première partie d'un diamètre supérieur à la largeur déterminée précitée, mais inférieur au diamètre déterminé précité, et de faible longueur, une deuxième partie dont le diamètre est légèrement inférieur à la largeur déterminée précitée et la longueur légèrement supérieure à l'épaisseur du matériau constituant la pédale, et une troisième partie d'un diamètre supérieur au diamètre déterminée précité, de telle façon que la première partie de l'extrémité de la tige puisse traverser la partie de forme arrondie de l'ouverture pratiquée dans la pédale, tandis que la troisième partie ne puisse pas la traverser, et que la deuxième partie puisse coulisser librement dans la partie de forme oblongue de l'ouverture précitée.

De préférence, la troisième partie de l'extrémité de la tige présente un profil arrondi en direction de la deuxième partie. De préférence aussi, la première partie affecte une forme tronconique dont la grande base est en regard de la deuxième partie.

De préférence enfin, la pédale présente au niveau du point d'appui de la tige un bossage faisant saillie du côté opposé à la tige, dont la forme est prévue pour coopérer avec l'éventuel profil arrondi de la troisième partie de l'extrémité de la tige.

L'invention sera mieux comprise, et d'autres buts, possibilités et avantages de celle-ci apparaîtront plus clairement à la lecture de la description qui suit d'un mode préféré de réalisation donné à titre non limitatif, à laquelle est joint un dessin sur lequel :

- la figure 1 représente schématiquement le mécanisme selon l'invention disposé dans son environnement,
- la figure 2 illustre, vue de dessus, l'ouverture pratiquée dans la pédale selon l'invention,
- la figure 3 représente schématiquement en coupe les trois partie de l'extrémité de la tige selon l'invention,
- la figure 4 représente schématiquement en coupe longitudinale selon la ligne B-B de la figure 2 le bossage de la pédale, et
- la figure 5 représente schématiquement en coupe selon la ligne A-A de la figure 2, la pédale selon un mode préféré de réalisation de l'invention.

En référence maintenant aux différentes figures, la pédale de frein 1 est constituée par un levier monté sur un pivot 2 solidaire du tablier 3 séparant le compartiment moteur de la cabine du véhicule. La tige 4 prend appui, d'une part, sur la pédale 1 et, d'autre part, sur un plongeur 5 d'un dispositif schématiquement représenté solidaire du tablier 3, et pouvant favorablement être constitué par un servo-moteur d'assistance au freinage.

Dans la pédale au niveau du point d'appui de la tige 4, on a pratiqué une ouverture en forme de trou de serrure ancienne, c'est-à-dire comportant une partie de forme arrondie 6 et une partie de forme oblongue 7 prolongeant la partie de forme arrondie 6 du côté opposé au pivot 2 de la pédale dans l'axe longitudinal de cette dernière.

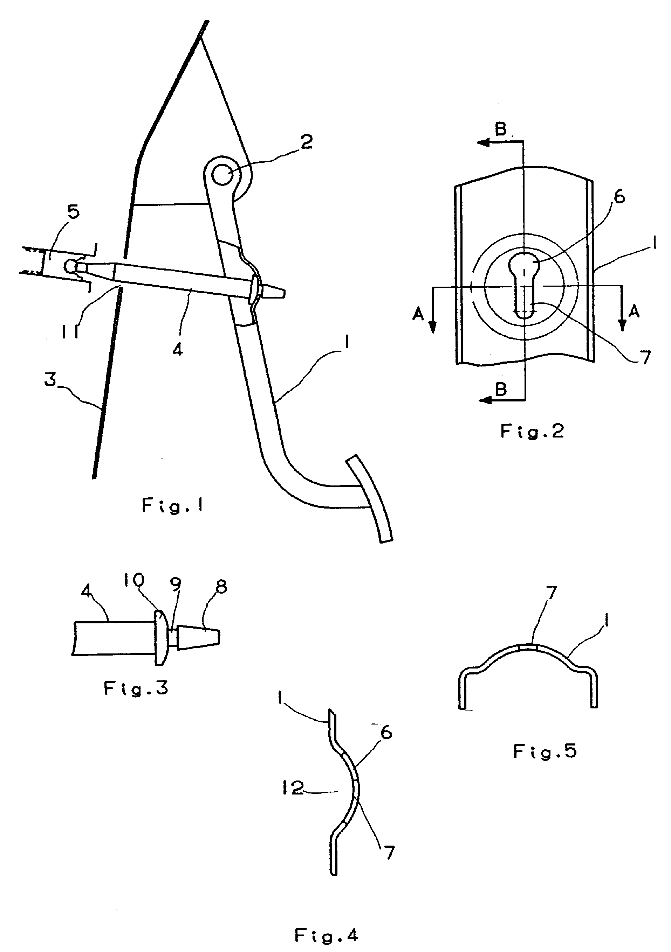

Par ailleurs, l'extrémité de la tige 4 en regard de la pédale est constituée successivement de plusieurs parties. La première partie 8 présente un diamètre supérieur à la largeur de la partie de forme oblongue 7 de l'ouverture pratiquée dans la pédale 1, mais inférieur au diamètre de la partie de forme arrondie 6 de cette ouverture de manière à pouvoir traverser cette dernière et non la première. De préférence, elle affecte une forme tronconique favorisant son introduction dans la partie de forme arrondie 6 de l'ouverture. La deuxième partie 9 affecte la forme d'un cylindre d'un diamètre inférieur à la largeur de la partie de forme oblongue 7 et de longueur légèrement supérieure à l'épaisseur du matériau constituant la pédale, de telle manière qu'elle puisse librement coulisser sur la longueur de cette partie de forme oblongue 7 de l'ouverture pratiquée dans la pédale. La troisième partie 10 enfin présente un diamètre supérieur à celui de la partie de forme arrondie 6 de l'ouverture de manière à ne pas pouvoir la traverser. De préférence, comme représenté figure 3, cette troisième partie 10 présente une forme arrondie en regard de la deuxième partie , comme on en verra ultérieurement l'avantage. Ces trois parties 8, 9 et 10 de l'extrémité de la tige peuvent favorablement être réalisées dans un capuchon en matière plastique fretté sur l'extrémité simple de la tige 4.

Pour la mise en place de tige, on procède de la façon suivante. En venant fixer le servomoteur au tablier 3 côté moteur, on fait pénétrer la tige 4 dans l'ouverture 11 prévue à cet effet dans le tablier 3. L'axe longitudinal de la pédale 1 est alors sensiblement parallèle au tablier 3 et la partie de forme arrondie 6 de l'ouverture pratiquée dans la pédale 1 est en regard de l'ouverture 11 dans le tablier 3. Les parties 8 et 9 de l'extrémité de la tige 4 pénètrent dans la partie de forme arrondie 6 de l'ouverture, mais la partie 10 de l'extrémité de la tige vient en butée sur la pédale. En continuant l'introduction de la tige 4, cette partie 10 en butée contre la pédale 1 va pousser la pédale qui fait un mouvement de rotation autour de son pivot 2. De ce fait, la partie 9 de l'extrémité de la tige va alors glisser dans la partie de forme oblongue 7 de l'ouverture pratiquée dans la pédale. Lorsque le servomoteur est en place et fixé, la tige 4 est alors totalement liée à la pédale puisque tout mouvement de la tige par rapport à la pédale sera contrarié soit par la partie 10 soit par la partie 8 de l'extrémité de la tige qui viendra en butée contre les bords de la partie de forme oblongue 7 de l'ouverture pratiquée dans la pédale. Bien évidemment, il faut que la course du plongeur 5 ne permettre pas à l'axe de la pédale 1 de revenir sensiblement parallèle au tablier 3. Ainsi, lors de l'utilisation de la pédale de frein par le conducteur du véhicule ainsi équipé, la partie 9 de la tige se déplacera longitudinalement par rapport à la pédale dans la partie de forme oblongue 7 de l'ouverture et la tige 4 ne pourra, en aucun cas, sortir de cette ouverture.

Pour favoriser ce déplacement, on préfère ménager un bossage 12 dans la pédale au niveau du point d'appui de la tige sur la pédale, comme représenté figure 4, bossage faisant saillie du côté opposé au tablier 3. La partie creuse de ce bossage va coopérer favorablement avec la forme arrondie de la troisième partie 10 de l'extrémité de la tige 4 pour répartir l'effort de pression régulièrement sur le pourtour de la partie de forme oblongue 7 de l'ouverture pratiquée dans la pédale.

De préférence, la pédale présente une section telle que représentée figure 5 de manière à en augmenter la rigidité et la résistance.

## Revendications

1.  Moyen de liaison entre une pédale de commande (1) formant levier tournant autour d'un pivot (2) et comportant une ouverture, formée dans un bossage (12) faisant saillie du côté opposé à une tige (4) solidaire d'un organe commandé (5) mobile en translation dans le plan déterminé par le mouvement de la pédale, l'extrémité de la tige (4) en regard de la pédale (1) étant constituée successivement par une première partie (8) d'un premier diamètre déterminé, par une seconde partie (9) en forme de cylindre d'un second diamètre déterminé et de longueur légèrement supérieure à l'épaisseur du matériau constituant ladite pédale, et par une troisième partie (10) d'un troisième diamètre déterminé et présentant un profil arrondi en direction de la deuxième partie (9) et coopérant avec la partie creuse du bossage (12), caractérisé en ce que l'ouverture formée dans le bossage présente une forme de trou de serrure ancienne, comprenant une première partie (6) de forme arrondie, de diamètre supérieur au premier diamètre déterminé et inférieur au troisième diamètre déterminé, et une seconde partie (7) de forme oblongue prolongeant la première partie du côté opposé au pivot (2) dans l'axe longitudinal de la pédale, de largeur inférieure au diamètre de la première partie (6) et légèrement supérieure au second diamètre déterminé, de telle façon que la première partie (8) de l'extrémité de la tige puisse traverser la partie (6) de forme arrondie de l'ouverture, tandis que la troisième puartie (10) ne puisse pas la traverser, et que la deuxième partie (9) de la tige (4) puisse coulisser librement de façon longitudinale par rapport à l'axe de la pédale (1) dans la seconde partie de forme allongée (7) de l'ouverture et en ce que la première partie (8) de la tige (4) a une longueur faible.

2. Moyen selon la revendication 1, caractérisé en ce que la dite première partie (10) de l'extrémité de la tige affecte une forme tronconique dont la grande base est en regard de la dite deuxième partie (9).

3. Moyen selon l'une quelconque des revendications précédentes, caractérisé en ce que les dites première, deuxième et troisième parties (8, 9, 10) de l'extrémité de la dite tige sont réalisées dans un capuchon en matière plastique fretté sur l'extrémité simple de la dite tige.

**Patentansprüche**

1. Einrichtung zum Verbinden eines Steuerpedals (1) in Form eines um eine Schwenkachse (2) schwenkbaren Hebels mit einer in einer Wölbung (12) ausgebildeten Öffnung, wobei die Wölbung zu der Seite vorspringt, die von einer Stange (4) abgewandt ist, welche fest mit einem Steuerorgan (5) verbunden ist, das translatorisch in der durch die Bewegung des Pedals definierten Ebene bewegbar ist, wobei das dem Pedal (1) zugewandte Ende der Stange (4) aufeinanderfolgend durch einen ersten Teil (8) mit einem ersten vorgegebenen Durchmesser, durch einen zweiten, zylindrischen Teil (9) zweitem vorgegebenen Durchmesser und mit einer Länge, die geringfügig größer ist als die Dicke des das Pedal bildenden Materials, und durch einen dritten Teil (10) mit drittem vorgegebenen Durchmesser gebildet ist, der ein in Richtung zum zweiten Teil (9) abgerundetes Profil aufweist und mit dem hohlen Teil der Wölbung (12) zusammenwirkt, dadurch gekennzeichnet, daß die in der Wölbung ausgebildete Öffnung die Form eines herkömmlichen Schlüssellochs aufweist, mit einem ersten gerundeten Teil (6), mit einem Durchmesser, der größer ist als der erste vorgegebene Durchmesser und kleiner als der dritte vorgegebene Durchmesser, und einem zweiten länglichen Teil (7), der den ersten Teil zu der von der Schwenkachse (2) abgewandten Seite in Richtung der Längsachse des Pedals verlängert, mit einer Breite, die geringer ist als der Durchmesser des ersten Teile (6) und geringfügig größer als der zweite vorgegebene Durchmesser, in solcher Weise, daß der erste Teil (8) des Endes der Strange den gerundeten Teil (6) der Öffnung durchqueren kann, daß jedoch der dritte Teil (10) sie nicht durchqueren kann, und daß der zweite Teil (9) der Stange (4) frei in Längsrichtung in bezug auf die Achse des Pedals (1) im zweiten länglichen Teil (7) der Öffnung gleiten kann und daß der erste Teil (8) der Stange (4) eine geringe Länge aufweist.

2. Einrichtung nach Anspruch 1, dadurch gekennzeichnet, daß der genannte erste Teil (10) des Endes der Stange die Form eines Kegelstumpfes aufweist, dessen große Basis dem genannten zweiten Teil (9) zugewandt ist.

3. Einrichtung nach einem der vorstehenden Ansprüche, dadurch gekennzeichnet, daß der genannte erste, der zweite und der dritte Teil (8, 9, 10) des Endes der genannten Stange in einer Kappe aus Kunststoffmaterial ausgebildet sind, die auf das einfach ausgebildete Ende der genannten Stange aufgeschrumpft ist.

**Claims**

1. Connection means between a control pedal (1), forming a lever rotating about a pivot (2) and having an aperture formed in a boss (12) projecting on the opposite side to a rod (4) fixed to a controlled member (5) movable in translational motion in the plane defined by the movement of the pedal, the end of the rod (4) confronting the pedal (1) consisting successively of a first part (8) of a specific first diameter, of a second part (9) in the form of a cylinder of a specific second diameter and of a length slightly greater than the thickness of the material of which said pedal consists, and of a third part (10) of a specific third diameter and having a profile rounded in the direction of the second part (9) and cooperating with the hollow part of the boss (12), characterized in that the aperture formed in the boss is in the form of an old-style keyhole, comprising a first part (6) of rounded form and of a diameter larger than the specific first diameter and smaller than the specific third diameter, and a second part (7) of oblong form extending the first part on the opposite side to the pivot (2) in the longitudinal axis of the pedal and of a width smaller than the diameter of the first part (6) and slightly larger than the specific second diameter, in such a way that the first part (8) of the end of the rod can pass through the part (6) of rounded form of the aperture, whilst the third part (10) cannot pass through it, and that the second part (9) of the rod (4) can slide freely in a longitudinal manner in relation to the axis of the pedal (1) in the second part of elongate form (7) of the aperture, and in that the first part (8) of the rod (4) has a small length.

2. Means according to claim 1, characterized in that the said first part (10) of the end of the rod assumes a frustoconical form, the large base of which is opposite the said second part (9).

3. Means according to any of the preceding claims, characterized in that the said first, second and third parts (8, 9, 10) of the end of the said rod are produced from a plastic hood shrunk onto the bare end of the said rod.

Fig.1

Fig.2

Fig.3

Fig.4

Fig.5